Europäisches Patentamt

European Patent Office

Office européen des brevets

(19)

(11) Veröffentlichungsnummer: **0 241 425**
**A1**

## (12) EUROPÄISCHE PATENTANMELDUNG

(21) Anmeldenummer: 87810201.1

(22) Anmeldetag: 03.04.87

(51) Int. Cl.⁴: **B 23 B 45/02**
**H 02 P 7/638**

(30) Priorität: 11.04.86 DE 3612193

(43) Veröffentlichungstag der Anmeldung:
14.10.87 Patentblatt 87/42

(84) Benannte Vertragsstaaten:
AT BE CH DE FR GB LI NL SE

(71) Anmelder: HILTI Aktiengesellschaft
FL-9494 Schaan (LI)

(72) Erfinder: Millauer, Wolfgang
Dietrich-Stein-Strasse 5
D-8000 München 60 (DE)

Hoyss, Franz
Georg-Schwaighofer-Strasse 7
D-8170 Wackersberg (DE)

Pauli, Heinrich
Holzbachstrasse 7
D-8034 Germering (DE)

Benz, Gottfried
Bahnstrasse 7
FL-9494 Schaan (LI)

(74) Vertreter: Wildi, Roland
Hilti Aktiengesellschaft Patentabteilung
FL-9494 Schaan (LI)

(54) **Antriebsregelung mit Ueberlastschutz für ein Bohrgerät.**

(57) Die Motorauslegung mit Antriebsregelung für ein mit Universalmotor ausgerüstetes Bohrgerät ist so gewählt, dass bereits bei einem Bruchteil des für den gesamten Arbeitsbereich verfügbaren Drehmoments am Motor die gesamte verfügbare Netzspannung anliegt. Wird ein höheres Drehmoment verlangt, so folgt die Drehzahl/Drehmomentkurve bis zum Erreichen eines Belastungspunkts, bei dem eine Strombegrenzung vorgesehen ist, der natürlichen Kennlinie. Durch diese bei Ueberschreiten des normalen Arbeitsbereichs abfallende Drehzahl wird dem Benutzer durch die Geräuschentwicklung des Geräts eine Information über den Belastungszustand vermittelt.

EP 0 241 425 A1

**Beschreibung**

Antriebsregelung mit Ueberlastschutz für ein Bohrgerät

Die Erfindung betrifft eine Antriebsregelung für ein Bohrgerät, wobei es sich in erster Linie um Bohrgeräte zum Betrieb von diamantbesetzten Werkzeugen handelt.

Der Antriebsmotor eines derartigen Bohrgerätes ist in aller Regel ein Universalmotor mit Reihenschlusscharakteristik.

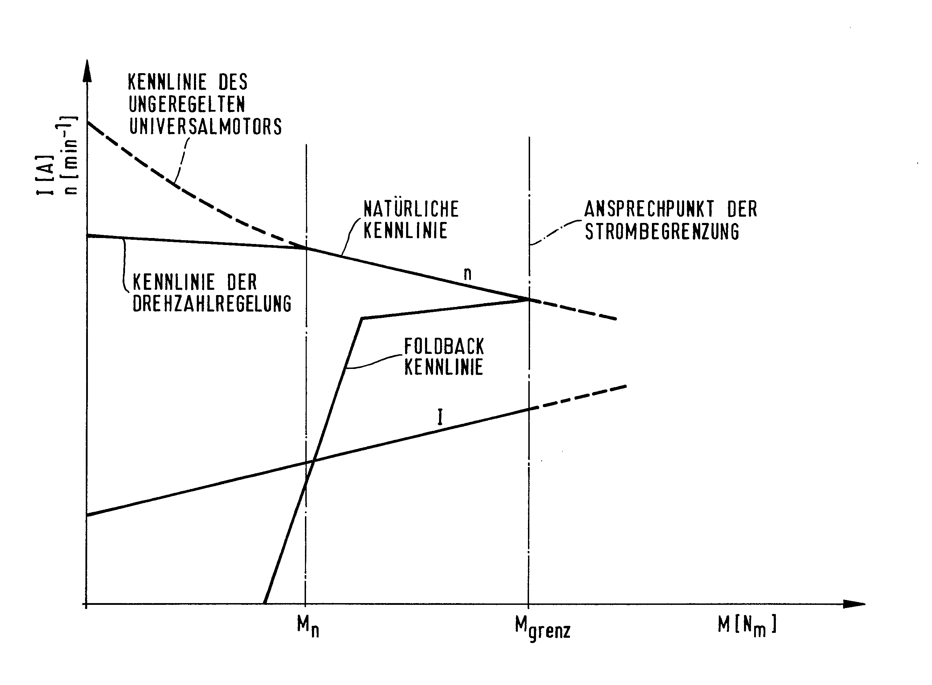

Die Kennlinie (Drehzahl über Drehmoment) eines solchen Antriebsmotors zeigt einen Verlauf, bei dem die Drehzahl mit zunehmendem Drehmoment monoton, d.h. weitgehend linear abnimmt. Der Verlauf dieser Kennlinie ist in der Zeichnung zur Erfindung angedeutet.

Der Stillstand dieses bekannten Antriebsmotors wird beim ca. Vier- bis Sechsfachen des Nennmoments erreicht. Der Motor entwickelt dann beim Blockieren relativ hohe Kräfte und nimmt einen entsprechend hohen Strom auf. Beides kann für das Bohrgerät und das Werkzeug schwere Schäden nach sich ziehen.

Andererseits läuft der Leerlaufpunkt dieses Antriebsmotors bei einer so hohen, bei Belastung relativ schnell abfallenden Drehzahl, dass damit praktisch nicht gearbeitet werden kann. Diese hohe Leerlaufdrehzahl hat jedoch beachtliche Beanspruchungen einzelner Komponenten wie Getriebelager und Wellendichtungen zur Folge und ist mitbestimmend für die Lebensdauer des Bohrgeräts. Ausserdem hat unter Umständen diese hohe Leerlaufdrehzahl einen wesentlichen Einfluss auf den maximalen Geräuschpegel des Geräts beim Betrieb.

Es ist ferner bekannt, für ein derartiges Bohrgerät eine Drehzahlregelung, verbunden mit einer Strombegrenzung vorzusehen. Die Drehzahlregelung verhindert den unerwünschten Drehzahlanstieg im Bereich der Teillast, so dass mit annähernd gleicher Drehzahl gearbeitet werden kann. Die Strombegrenzung limitiert die maximale Stromaufnahme und das maximale Drehmoment, indem sie bei Ueberschreiten eines bestimmten Stroms die am Motor verfügbare Spannung soweit reduziert, dass der Strom nicht weiter ansteigen kann. Dies hat dann zur Folge, dass bei unverändertem oder weiter steigendem Momentbedarf an der Bohrspindel die Drehzahl sehr rasch eventuell bis zum Stillstand abfällt. Da der in diesem Fall fliessende Strom wegen der im Stillstandspunkt fehlenden Luftkühlung dem Motor immer noch gefährlich werden kann, wird für die Strombegrenzung vielfach eine Kennlinie gewählt, die bei sinkender Drehzahl eine zusätzliche Reduzierung des Stroms zur Folge hat. Eine solche Charakteristik ist in der Fachwelt auch unter dem Begriff "Foldback-Kennlinie" bekannt.

Insbesondere eine Strombegrenzung der letzteren Art hat jedoch für den Anwender eines mit diamantbestückten Werkzeugen ausgerüsteten Bohrgeräts, das in der Regel ähnlich wie eine Ständerbohrmaschine mit einem beispielsweise handbetätigten mechanischen Vorschub betrieben wird, zur Folge, dass im Falle des Ueberschreitens der maximalen Anpresskraft, was gleichbedeutend ist mit dem Ueberschreiten des maximalen Stroms, die Drehzahl der Bohrspindel so rasch gegen Null fällt, dass kaum Zeit zum Reagieren, d.h. zum Lösen des Vorschubs bleibt, bevor die Bohrspindel stillsteht. Dabei kann es häufig geschehen, dass sich die Bohrkrone so festsetzt, dass der Vorschub weit zurückgefahren werden muss, um den Antrieb wieder in Bewegung zu setzen. Ein derartiges Verhalten des Bohrgeräts wird vom Anwender als Behinderung empfunden.

Eine besondere Bedeutung bekommt das mit dem Motorstillstand verbundene Problem zusätzlich dadurch, dass bei drehzahlgeregeltem Antrieb im gesamten Arbeitsbereich eine nahezu lastunabhängige Drehzahl erreicht wird. Dadurch aber verliert der Anwender das "Gefühl" für den jeweils eingestellten Belastungszustand, weil das gesamte drehzahlabhängige Geräuschfrequenzspektrum einen "Konstantcharakter" annimmt und der übliche, gewohnte, als "Belastungsindikator" wir kende Drehzahlabfall sich nicht mehr als Geräuschfrequenzabfall bemerkbar macht.

Der Erfindung liegt die Aufgabe zugrunde, einen für Bohrgeräte, die insbesondere zum Betrieb von diamantbesetzten Werkzeugen vorgesehen sind, besser geeigneten geregelten Antrieb zu schaffen, bei dem die erwähnten negativen Folgen einer Strombegrenzung bei steigendem Arbeitsdrehmoment und Motorstillstand nicht mehr auftreten oder wesentlich weniger zu befürchten sind.

Die im Patentanspruch 1 angegebene technische Lehre ist darauf gerichtet, eine Drehzahlregelung der eingangs erwähnten Art mit Strombegrenzung zusammen mit einem Universalmotor einer ganz speziellen Auslegung zu betreiben.

Erfindungsgemäss ist die Motor- und Drehzahlauslegung so gewählt, dass bereits bei einem Bruchteil des für den gesamten Arbeitsbereich verfügbaren Drehmoments der Motor die gesamte verfügbare Versorgungsspannung (Netzspannung) benötigt. In der Zeichnung zur Erfindung ist dieser Punkt willkürlich mit $M_n$ bezeichnet. An dieser Stelle der Kennlinie verliert die Drehzahlregelung für den weiteren, rechts von der Stelle $M_n$ liegenden Bereich der Kennlinie ihre Wirksamkeit, da bereits die volle Netzspannung anliegt, von der durch die Regelung lediglich etwas abgezogen, jedoch nichts hinzugefügt werden kann. Dadurch wird erreicht, dass der Motor bei zunehmender Last ab Erreichen das Punkts $M_n$ im Verlauf seiner natürlichen Kennlinie betrieben wird und wie beschrieben auf Belastungserhöhung mit relativ starkem Drehzahleinbruch reagiert.

Nähert sich der Gerätebenutzer durch zunehmende Belastung dem Ansprechpunkt $M_{grenz}$ der Strombegrenzung, so wird er über diesen Zustand rechtzeitig durch entsprechendes Absinken der Frequenzlage des gesamten Geräuschspektrums laufend informiert. Spätestens nach mehrmaligem Erreichen der Strombegrenzung wird ein durchschnittlich begabter Gerätebenutzer durch Selbsterfahrung am Geräuschverhalten des Geräts be reits vor Erreichen des Ansprechpunkts der Strombegrenzung ein Empfinden für die Grösse der Belastung bzw. für die Annäherung an den Ansprechpunkt bekommen.

Durch die Erfindung wird also die Bedienbarkeit des Geräts wesentlich benutzerfreundlicher. Andererseits bleibt die Eigenschaft der Drehzahlregelung voll erhalten in dem Bereich, in dem sie in erster Linie erwünscht ist, nämlich zur Begrenzung der Leerlaufüberhöhung. Auch bleibt die Strombegrenzung im Bereich der Ueberlast voll wirksam. Zwischen dem Bereich normaler Belastung und dem Ansprechpunkt liegt jedoch ein Kennlinienbereich, in dem weder das eine noch das andere in Funktion ist und das Gerät sich wie ein ungeregeltes Elektrowerkzeug verhält, das durch seine Geräuschentwicklung deutlich seinen Lastzustand signalisiert. Der Einsatzpunkt der Strombegrenzung ermöglicht darüberhinaus dem Benutzer in einer Art Selbstlernprozess ein Gefühl für den Belastungszustand des Geräts und die dem Werkzeug zumutbare Belastung zu entwickeln, ohne das Gerät oder das Werkzeug zu beschädigen.

Die erfindungsgemässe Motorauslegung bzw. Antriebsregelung ist besonders kostengünstig, weil die erwünschten neuen Eigenschaften ohne zusätzlichen technischen Aufwand erreicht werden, der über eine bekannte Drehzahlregelung mit Strombegrenzung hinausginge.

## Patentansprüche

1. Antriebsregelung für ein Bohrgerät mit Reihenschluss-Universalmotor und Strombegrenzung bei Erreichen eines Belastungsgrenzmoments ($M_{grenz}$),
**dadurch gekennzeichnet,** dass die Motorauslegung und die Motor-Drehmoment/Drehzahlkennlinie so gewählt sind, dass bereits bei einem Bruchteil ($M_n$) des für den gesamten Arbeitsbereich verfügbaren Drehmoments am Motor die gesamte verfügbare Versorgungsspannung anliegt.

2. Antriebsregelung nach Anspruch 1,
**dadurch gekennzeichnet,** dass bei Erreichen des Belastungsgrenzmoments ($M_{grenz}$) eine zusätzliche Reduzierung des Grenzstroms einsetzt.

KENNLINIE DES
UNGEREGELTEN
UNIVERSALMOTORS

$I\,[A]$
$n\,[min^{-1}]$

NATÜRLICHE
KENNLINIE

ANSPRECHPUNKT DER
STROMBEGRENZUNG

KENNLINIE DER
DREHZAHLREGELUNG

n

FOLDBACK
KENNLINIE

I

$M_n$

$M_{grenz}$

$M\,[N_m]$

| EINSCHLÄGIGE DOKUMENTE | | | EP 87810201.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| Y | DE - A - 2 312 127 (BOSCH)<br><br>* Fig. 2; Seite 3, 6. Zeile von unten - Seite 6, 1. Absatz *<br><br>-- | 1,2 | B 23 B 45/02<br>H 02 P 7/638 |
| Y | DE - A - 2 326 045 (HEBERLEIN)<br><br>* Fig. 2; Seite 5, 3. Absatz *<br><br>-- | 1,2 | |
| A | DE - B2 - 1 763 279 (BOSCH)<br><br>* Fig. 2; Spalte 2, Zeile 32 - Spalte 4, Zeile 7 *<br><br>---- | 1 | |
| | | | RECHERCHIERTE SACHGEBIETE (Int. Cl 4)<br><br>B 23 B 45/00<br>B 23 B 47/00<br>H 02 P 7/00 |

Der vorliegende Recherchenbericht wurde für alle Patentansprüche erstellt.

| Recherchenort | Abschlußdatum der Recherche | Prüfer |
|---|---|---|
| WIEN | 15-07-1987 | LEBZELTERN |